Europäisches Patentamt

(19) European Patent Office

Office européen des brevets

(11) Publication number: **0 131 016**
**B1**

(12) **EUROPEAN PATENT SPECIFICATION**

(45) Date of publication of patent specification: **01.04.87**

(51) Int. Cl.⁴: **D 07 B 1/22**

(21) Application number: **84900324.9**

(22) Date of filing: **21.12.83**

(86) International application number:
**PCT/SE83/00467**

(87) International publication number:
**WO 84/02541 05.07.84 Gazette 84/16**

⑧⑧ **Consolidated with 83850340.7/0112318**
**(European application No./publication No.) by**
**decision dated 28.10.85.**

(54) **USE OF A LOOPED ROPE.**

(30) Priority: **22.12.82 SE 8207321**

(43) Date of publication of application:
**16.01.85 Bulletin 85/03**

(45) Publication of the grant of the patent:
**01.04.87 Bulletin 87/14**

(84) Designated Contracting States:
**AT BE CH DE FR GB IT LI LU NL SE**

(56) References cited:
**DE-A-2 535 188**
**DE-A-2 643 382**
**SE-B- 401 936**
**SE-B- 411 234**

(73) Proprietor: **IVARSSON, Sune**
**Gamla Edsvägen 19**
**S-668 00 Ed (SE)**

(72) Inventor: **IVARSSON, Sune**
**Gamla Edsvägen 19**
**S-668 00 Ed (SE)**

(74) Representative: **Roth, Ernst Adolf Michael et al**
**GÖTEBORGS PATENTBYRA AB Box 5005**
**S-402 21 Göteborg (SE)**

Courier Press, Leamington Spa, England.

## Description

In many fields, such as e.g. transport industry, building industry, agriculture, for cars, boats etcetera, there is a need for elongated elements for lashing, anchoring, attachment, transport and towing. Conventional ropes, chains, wires and the like are generally used for such purposes, and for being attachable to the elements that shall be lashed, located, attached, transported or towed, these ropes, chains, etcetera must be tied manually and/or be equipped with more or less sophisticated connecting members.

At attachment by means of tying or splicing it is often required a particular skill for placing the knots in an intended position and preventing them from being able to slide to an undesired extent and the particular connecting members mean a cost increase at the same time as they in may cases are arranged at predetermined, not adjustable positions along the elongated element. This means in all cases drawbacks at the fitting of the member in question, as well concerning the time required for bringing about the attachment as regarding the possibility of obtaining attachment points which are positionally well adapted to the requirement.

It has earlier by Swedish patent specification 7702420—6 (SE—C—401936) been proposed to produce textile healds for looms, as a continuous series of loops which are interconnected by single ribs, whereby two loops are attached to the shaft frames and an intermediate loop is allowed to serve as heald eyelet. These lengths of textile healds are produced in a hackling machine, whereby two threads are crochetted to form the loops, whereby the threads are brought alongside each other and loops situated just opposite each other in the two threads are crochetted together at certain positions along the length of the two threads thus that a rib in each loop engages in and is hooked around the corresponding rib in the opposite loop.

By Swedish patent specification 7805843—5 (SE—A—411234) it has also been proposed a system for tying up an hand loom, whereby a similar crochet has been used.

The purpose and most essential features of the invention

The invention has now for a purpose to provide an elimination of the above difficulties and drawbacks and this is achieved by the use of a looped rope consisting of two strands crochetted from bundles of threads which strands are crochetted together thus that the rope consists of a continuous series of loops, which two and two are interconnected by a narrow interconnecting rib, as a connecting member for lashing, anchoring, attachment, transport, towing or the like, whereby the rope can be arranged as a running noose or self-locking loop.

Description of the Drawings

The invention will hereinafter be further described with reference to embodiments shown in the accompanying drawings.

Figure 1 shows a portion of a looped rope intended to be used according to the invention,

Figure 2 shows such a looped rope arranged as a running noose,

Figure 3 shows an arrangement as a self-locking loop.

Description of the Embodiments

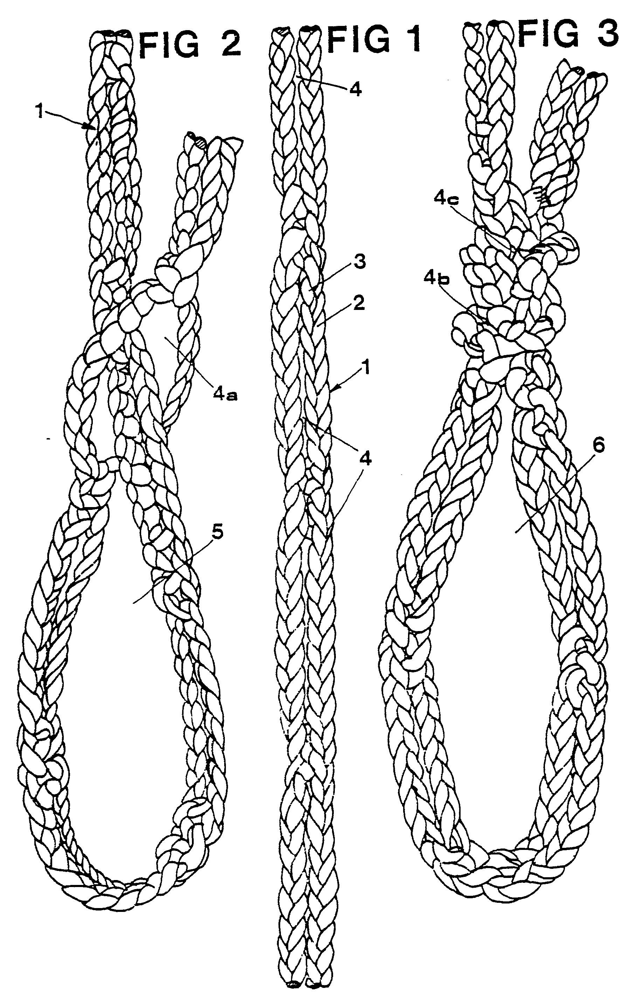

Figure 1 shows a looped rope or a running-and-locking rope 1 or a runlock rope produced in a manner known per se thereby that two ropes 2, crochetted from bundles of threads 3 in a hackling machine are crochetted together thus that the rope consists of a series of loops 4, preferably of the same size.

In figure 2 is shown how the looped rope in a simple manner can be arranged as a running noose 5, by letting the rope pass through a loop 4a.

The rope can just as simple, such as shown in figure 3, be arranged in a self-locking loop 6, whereby a part of the rope 1 is at first allowed to pass through a loop 4b, whereupon a loop 4c in the part of the rope which has passed through loop 4b is allowed to enclose the part of the rope, which extends away from the first loop 4b. In this manner is obtained a loop 6 which is run proof and safe. The connections can in both cases be provided without tying or splicing and without the need of using separate connecting members, or especial connecting members integral with the elongated elements.

As examples of different fields of use can be mentioned transport industry where runlock ropes can be used according to the invention for lashing and arresting cargo for air, sea or lorry transport, but also for lashing and arresting of covers and tarpaulins.

In building industry it can replace conventional ropes, chains and cables at lifts, lashing and the like.

The runlock rope can in forestry and at hunting be used to replace steel-wire as heaving line at manual logging and as hauling rope when hauling cloven-footed game to carriageway.

The runlock rope is also well suited for towing vehicles and boats and for anchoring purposes, as lashing, ship fender rope and the like.

The runlock rope can be used for a wide range of purposes in the leisure area and the runlock rope is suitable as life-saving, safety or life line within several areas.

This looped rope or runlock rope so to a very large extent can replace conventional ropes, chains and wires with an increased, improved and more safe use, and with unique properties as regards self-locking, marling and lashing without use of knots, splicing or additional connecting members.

## Claim

Use of a looped rope (1) consisting of two strands (2) crochetted from bundles of threads (3) which strands (2) are crochetted together thus that the rope consists of a continuous series of loops (4, 4a, 4b, 4c), which two and two are interconnected by a narrow interconnecting rib, as a connecting member for lashing, anchoring, attachment, transport, towing or the like, whereby the rope can be arranged as a running noose (5) or self-locking loop (6).

## Patentanspruch

Verwendung einer Seilschleife (1), die aus zwei Strängen (2), aus zusammengewirkter Fadenbündel besteht, welche Stränge (2) so zusammengewirkt sind, dass das Seil eine kontinuierliche Reihe von Sohlingen (4, 4a, 4b, 4c) umfasst, welche paarweise gegenseitig durch einen schmalen Verbindungssteg verbunden sind, als Verbindungsorgan zum Zurren, Verankern, Anschliessen, Transport, Abschleppen oder dergleichen, wobei das Seil Öse (5) oder als silbsthemmende Schleife (6) arrangiert werden kann.

## Revendication

Utilisation d'une corde bouclée (1) constituée de deux torons (2) crochetés à partir de faisceaux de fils (3), dont les torons (2) sont crochetés ensemble si bien que la corde consiste en une série continue de boucles (4, 4a, 4b, 4c) qui sont reliées deux par deux par étroit support de liaison, tel qu'un élément de liaison pour l'amarrage, l'ancrage, la fixation, le transport, le remorquage ou analogues de telle sorte que la corde puisse être disposée comme un noeud coulant (5) ou une boucle à auto-serrage.

0 131 016

FIG 2    FIG 1    FIG 3